# EUROPÄISCHE PATENTSCHRIFT

(11) **EP 0 670 393 B1**
(45) Veröffentlichungstag und Bekanntmachung des Hinweises auf die Patenterteilung: **22.10.1997**
(21) Anmeldenummer: 95102499.1
(22) Anmeldetag: 22.02.1995
(51) Int. Cl.: E03B 11/14, E04H 7/18

(54) **Wasserkammer eines Trinkwasser-Hochbehälters**
Water chamber of an elevated drinking water reservoir
Chambre à eau d'un réservoir surélevé à eau potable

(30) Priorität: 05.03.1994 DE 4407356; 05.03.1994 DE 4407354; 05.03.1994 DE 4407355
(43) Veröffentlichungstag der Anmeldung: 06.09.1995
(60) Teilanmeldung: 96115719.5
(73) Patentinhaber: VSB VOGELSBERGER Umwelttechnischer Anlagenbau GmbH, D-36369 Lautertal-Eichenrod (DE)
(72) Erfinder: Scharenberg, Dieter, Dipl. Ing., D-57577 Hamm/Sieg (DE)
(74) Vertreter: Zahn, Roland, Dipl.-Ing.

(56) Entgegenhaltungen:
- CH-A- 310 185
- DE-A- 3 101 175
- DE-C- 229 411
- FR-A- 1 037 086
- GB-A- 751 652

## Beschreibung

Die vorliegende Erfindung bezieht sich auf einen Hochbehälter für die Trinkwasserspeicherung nach dem Oberbegriff des Patentanspruchs 1.

Hochbehälter der vorgenannten Art sind in Verbindung mit der Wasserversorgung zur Deckung des Wasserbedarfs mit Trinkwasser bekannt (vergleiche FR-A-1 037 086 und DE-C-229 411). Dabei wird das Wasser von den Gewinnungsstellen dem Wasserwerk zugeführt, hier zu Reinwasser aufbereitet, in Wasserbehältern - beispielsweise in gattungsgemäßen Hochbehältern - gespeichert und in die Verteilungsanlagen (nämlich das Rohrnetz der kommunalen Wasserversorgungseinrichtungen) gefördert.

Für einen einwandfreien Betrieb eines gattungsgemäßen Hochbehälters ist es erforderlich, daß sich das Luftvolumen über dem in der Wasserkammer gespeicherten Trinkwasser jeweils dem Wasserspiegel entsprechend einstellen kann. In Verbindung mit bekannten Hochbehältern wird dies dadurch erreicht, daß dezentral an irgendeiner Ecke der gesamten Anlage Be- und Entlüftungsstutzen vorgesehen sind, über die automatisch mit einem Anstieg oder einem Abfall des Wasserspiegels Luft nach außen gedrückt oder angesaugt wird. Der Be- und Entlüftungsanschluß führt dabei unmittelbar in die Wasserkammer, so daß etwa eingeführte Giftstoffe oder dergleichen unkontrolliert ins Trinkwasser gelangen können.

Die der vorliegenden Erfindung zugrunde liegende Aufgabe besteht mithin darin, einen Hochbehälter anzugeben, bei dem die vorstehend genannte Gefahr eliminiert ist.

Der prinzipielle Lösungssatz ist durch die im Patentanspruchs 1 angegebenen Merkmale gegeben.

Mit anderen als im vorstehend zitierten Anspruch 1 gebrauchten Worten besteht der Kern der vorliegenden Erfindung darin, die Luftausgleichsleitung zwischen Wasserkammer und Außenwelt ins Gesamtbauwerk zu integrieren um jegliche Manipulationen von außen zu verhindern.

Damit kann also der erforderliche Luftaustausch zentral und kontrolliert erfolgen und etwa in einen Be- und Entlüftungsanschluß eingeführte Gift- beziehungsweise Schadstoffe können nicht direkt ins Trinkwasser gelangen. Der Luftaustausch für die Wasserkammer erfolgt über ein zentral angeordnetes Einrohr-Kontrollsystem, welches eine Meß- und Kontrollkammer aufweist, über die zuströmende Luft kontinuierlich gefiltert und meßtechnisch überwacht wird. Um zu verhindern, daß durch den Be- und Entlüftungsanschluß etwa flüssige Giftstoffe oder dergleichen unmittelbar in die Wasserkammer gelangen, ist vorgesehen, die Meß- und Kontrollkammer unterhalb der Durchführung des Lüftungsrohrs zur Wasserkammer anzuordnen, damit diese Flüssig-Giftstoffe nach unten in die Bedienungskammer ablaufen. In besonderer Ausgestaltung weist die Meß- und Kontrollkammer Sensoren auf, die gegebenenfalls dann einen Alarmgenerator aktivieren, wenn die zugeführte (nachströmende) Luft ein Übermaß an schädlichen Bestandteilen aufweist. Damit ist dann auch eine automatische Abschaltung der Trinkwasserversorgung möglich.

In weiterer Ausgestaltung des vorstehend spezifizierten Hochbehälters ist vorgesehen, zur besseren Belüftung des Bodenbereichs der Bedien- und Schieberkammer eine zweite Lüftungsleitung durch die Trinkwasserkammer zu führen.

Die Einzelheiten der vorliegenden Erfindung werden im folgenden anhand der Zeichnung näher erläutert. Diese zeigt in
- Fig. 1: einen Hochbehälter in geschnittener Ansicht als Systemschnitt A-A entsprechend dem Grundriß nach Fig. 2;
- Fig. 2: eine Aufsicht auf den Grundriß des Hochbehälters nach Fig. 1.

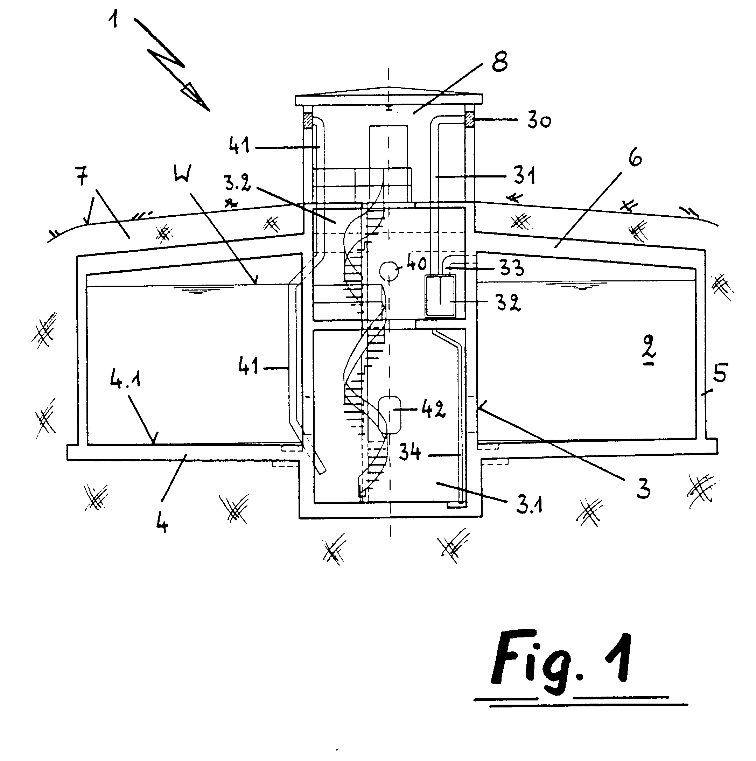

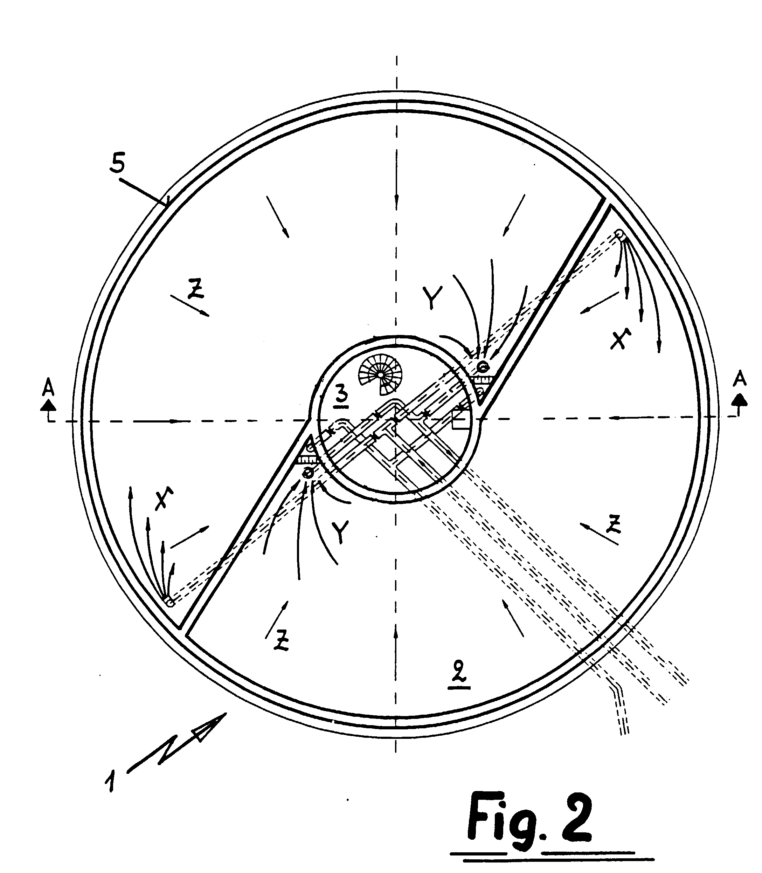

Der in Fig. 1 und Fig. 2 zeichnerisch dargestellte Hochbehälter 1 als Gesamtbauwerk besteht aus einer kreisringförmigen Wasserkammer, d.h. einem kreisringförmigen Rundbecken 2, und einem koaxial im Rundbecken eingesetzten, im folgenden Rundturm 3 genannten, Kreiszylinder. Dieser Rundturm 3 hat drei Ebenen und dient im unteren Bereich als Bedienungs- und Schieberkammer 3.1 und im darüber liegenden Bereich als Kontrollgebäude 3.2. Der Rundturm 3 enthält demzufolge sämtliche Installationen und Gerätschaften zur bestimmungsgemäßen Bedienung und Überwachung des Hochbehälters 1. Oberirdisch ist ein Eingangsbereich 8 angeordnet, wobei die einzelnen Stockwerke beziehungsweise Ebenen über radial, an der runden Schieberkammerwand befestigte Treppenstufen, oder wahlweise über eine Wendeltreppe erreicht werden. An der Decke des Eingangsbereichs kann eine Kranschiene für einen Hebezug angebracht werden; in der Mitte der Zwischendecken sind Öffnungen vorgesehen, durch die eine problemlose Montage und Wartung der Schieber und Geräte möglich ist. Im Rundturm 3 kann selbstverständlich auch eine Druckerhöhungsanlage für einzelne Häuser oder Baugebiete installiert werden; elektrische Einrichtungen und Schaltschränke oder dergleichen sind aus naheliegenden Gründen im oberen Eingangsbereich 8 untergebracht.

Das kreisringförmige Rundbecken 2 und der Rundturm 3 gründen auf einer gemeinsamen homogenen Bodenplatte 4, wobei der Kreisring zwischen dem Rundturm 3 und einer konzentrischen Außenwand 5 des Rundbeckens 2 dieses Rundbecken 2 dimensionsmäßig bestimmen. Da das Gesamtbauwerk auf einer einheitlichen Bodenplatte 4 gegründet ist, die nur durch einen tieferliegenden Teil der Bedienungs- und Schieberkammer unterbrochen ist, scheiden Schäden, die sonst durch Setzungen einzelner Bauteile und nur durch aufwendige Dehnungsfugen und elastische Rohrverbindungen verhindert werden können von vornherein aus.

Die Wasserkammer, d.h. das Rundbecken 2, weist eine Deckplatte 6 auf, auf der zwecks geologischer Einbettung im Gelände Erdreich 7 abgelagert ist. Somit steht letztlich nur der Eingangsbereich 8 für den Rundturm 3 dem Erdreich 7 gegenüber vor, so daß vom gesamten Hochbehälter 1 - anders als bei den bekannten Hochbehältern - nur ein relativ kleiner Teil sichtbar ist (und die Landschaft stört). Insoweit ist noch besonders darauf hinzuweisen, daß keinerlei Be- und Entlüftungsstutzen an irgendeiner Stelle des Erdreichs vorragen.

Die bisherige Beschreibung des in der Zeichnung dargestellten Hochbehälters 1 betrifft alleine dessen konzeptionelle Grundaufgabe.

Im Hinblick auf die vorliegende Erfindung ist der vorbeschriebene Hochbehälter 1 - vergleiche Fig. 1 - geräte- beziehungsweise installationstechnisch weiter wie folgt ausgestattet:

Im oberen Bereich des Eingangsbereichs 8 der Bedienungs und Schieberkammer ist eine Zu- und Ablufteinrichtung 30 angebaut, an die zur Belüftung der Wasserkammer eine erste Lüftungsleitung 31 anschließt. Diese erste Lüftungsleitung 31 führt senkrecht nach unten zu einer Meß- und Kontrollkammer 32, die mit Filtern und Luftanalysegeräten (Sensoren) ausgerüstet ist. Die zugeführte Luft wird so kontinuierlich von der Meß- und Kontrollkammer 32 analysiert und ausgangsseitig wieder abgegeben, und zwar über einen Lüftungsrohrstutzen 33, der ins Innere der Wasserkammer führt.

Das gesamte Zu- und Abluftsystem besteht somit aus der zentralen ersten Lüftungsleitung 31 (zuzüglich Lüftungsrohrstutzen 33), in dessen Verlauf die Meß- und Kontrollkammer 32 integriert ist, die die Zuluft ständig überwacht und im Falle einer Störung entsprechende (Alarm-) Signale zu generieren vermag. Damit kann gegebenenfalls eine automatische Abschaltung der Trinkwasserentnahme gesteuert werden.

Zur Funktion sei noch auf folgendes hingewiesen: Mit dem Ansteigen und Abfallen des Wasserspiegels W in der Wasserkammer, d.h. im Rundbecken 2, wird jeweils Luft nach außen gedrückt oder von außen angesaugt. Diese angesaugte Luft wird dann jeweils meßtechnisch untersucht.

Um auch für den Fall einer etwa eingeführten oder eingespritzten Flüssigkeit gewappnet zu sein, ist die Meß- und Kontrollkammer 32 unterhalb des Niveaus des Lüftungsrohrstutzens 33 angeordnet. Damit ist gewährleistet, daß unzulässigerweise zugeführte Flüssigkeiten über ein Ablaufrohr 34 nach unten wegströmen und so nicht in das gespeicherte Trinkwasser gelangen können. Gegebenenfalls kann an dem in der Meß- und Kontrollkammer 32 liegenden Rohranfang des Luftrohrstutzens 33 eine Schließkugel angesetzt werden, die bei einem Ansteigen des Flüssigkeitspegels in der Meß- und Kontrollkammer 32 den Lüftungsrohrstutzen 33 automatisch schließt.

Die Wasserkammer ist gänzlich verschlossen (verkapselt) und sie kann visuell quasi nur durch Bullaugen 40 überwacht und über Drucktüren 42 im entleerten Zustand betreten werden. Da der Luftaustausch ausschließlich über die Meß- und Kontrollkammer 32 erfolgt, ist somit eine optimale Betriebssicherheit gegeben. Es gelangt stets nur soviel Luft ans Trinkwasser, wie zu dessen Frischhaltung und zum physikalischen Druckausgleich notwendig ist und die Wassertemperatur ihrerseits kann übers ganze Jahr weitgehend konstant gehalten werden.

An dieser Stelle ist noch anzumerken, daß zur Optimierung des Temperaturausgleichs zwischen der Wasserkammer und der Bedienungs- und Schieberkammer ein zweite Lüftungsleitung 41 vorgesehen ist, die die zum unteren Bereich des Rundturms 3 geleitete Luft aufgrund einer Leitungsführung durch die Wasserkammer infolge des Wärmeaustauscheffekts auf die gleiche Temperatur wie die Wassertemperatur bringt. Damit wird jeder unerwünschte Temperatursprung zwischen der Wasserkammer und dem Rundturm 3 minimiert beziehungsweise kompensiert. Die Bildung von Schwitzwasser kann nicht stattfinden, so daß in der Bedienungs- und Schieberkammer stets trockene Wände gewährleistet sind.

Gemäß einer besonderen konstruktiven Ausführungsform ist vorgesehen, die Deckplatte 6 auf der Außenwandung 5 und auf den beiden unteren Etagen / Ebenen des Rundturms 3 aufzulagern, so daß - statisch betrachtet - insgesamt ein einheitlicher Baukörper vorhanden ist.

Dieses Gesamtbauwerk kann einheitlich aus Ortbeton erstellt werden; denkbar ist auch, die Bodenplatte 4 aus Ortbeton herzustellen und die Ringwände 5 des Rundbeckens 2 sowie den Rundturm 3 einschließlich Eingangsbereich 8 aus Betonfertigteilen zu erstellen.

## Patentansprüche

1. Hochbehälter (1) für die Trinkwasserspeicherung, bestehend aus einem Rundturn (3) mit einer als kreiszylinder ausgebildeten Bedienungs- und Schieberkammer (3.1) und einem Kontrollgebäude (3.2) und einer kreisförmigen Kammer für Trinkwasser, sowie mindestens einem Zulauf (11) und mindestens einem Ablauf (12) für das Trinkwasser,
wobei die Kammer für Trinkwasser als kreisringförmiges Rundbecken oder Rundbauwerk (2) ausgebildet ist,
wobei die Bedienungs- und Schieberkammer (3.1) konzentrisch im Rundbecken (2) angeordnet ist, und
wobei der Rundturm (3) und das Rundbecken (2) auf einer gemeinsamen Bodenplatte (4) gegründet sind und der Rundturm (3) dem Rundbecken (2) gegenüber hermetisch abgeschottet ist,
dadurch gekennzeichnet,
daß die Oberseite der Wasserkammer über eine zur Oberseite der Bedienungs- und Schieberkammer führende erste Lüftungsleitung (31) mit der Außenwelt verbunden ist, in deren Verlaufe eine Meß- und Kontrollkammer (32) integriert ist.

2. Hochbehälter nach Anspruch 1,
dadurch gekennzeichnet,
daß in der Meß- und Kontrollkammer (32) Filter zur Reinigung der über die erste Lüftungsleitung (31) zur Kammer für Trinkwasser geführten Luft vorgesehen sind.

3. Hochbehälter nach Anspruch 1 oder 2,
dadurch gekennzeichnet,
daß in der Meß- und Kontrollkammer (32) Sensoren zur Überwachung der über die erste Lüftungsleitung (31) zur Kammer für Trinkwasser geführten Luft vorgesehen sind.

4. Hochbehälter nach einem der Ansprüche 1 bis 3,
dadurch gekennzeichnet,
daß zur Belüftung des Bodenbereichs der Bedienungs- und Schieberkammer eine durch die Kammer für Trinkwasser geführte zweite Lüftungsleitung (41) vorgesehen ist.

## Claims

1. High-level reservoir (1) for the storage of drinking water, consisting of a round tower (3) with a cylindrical service and sliding chamber (3, 1) for drinking water, as well as at least one outlet (12) for the drinking water,
wherein the chamber for drinking water is constructed as a cylindrical round basin or circular structure (2), in which the service and sliding chamber (3.1) are concentrically arranged in the round basin (2),
and wherein the round tower (3) and the round basin (2) are situated on a common base plate (4) and the round tower (3) is hermetically partitioned by means of bulkheads with respect to the round basin (2),
characterised
in that the top side of the water chamber is connected to the outside world via a first ventilation pipe (31) leading to the top side of the service and sliding chamber, in the course of which ventilation pipe there is integrated a measuring and control chamber(32).

2. High-level reservoir according to claim 1,
characterised
in that in the measuring and control chamber (32) there are provided filters for cleaning the air fed via the first ventilation pipe (31) to the chamber for drinking water.

3. High-level reservoir according to claim 1 or 2,
characterised
in that in the measuring and control chamber (32) there are provided sensors for monitoring the air fed via the first air ventilation pipe (31) to the chamber for drinking water.

4. High-level reservoir according to one of the claims 1 to 3,
characterised
in that for ventilation the base region of the service and sliding chamber there is provided a second ventilation pipe (41) passed through the chamber for the drinking water.

## Revendications

1. Réservoir surélevé (1) pour le stockage d'eau potable, composé d'une tour ronde (3) avec une salle de commande et de vannes (3.1) formée de façon cylindrique circulaire, et d'un bâtiment de contrôle (3.2) et d'une salle circulaire pour l'eau potable, ainsi que d'au moins une arrivée (11) et au moins une sortie (12) d'eau potable, la salle pour l'eau potable étant formée comme un bassin ou un édifice circulaire en forme d'anneau circulaire (2), la chambre de commande et de vannes étant placée de façon concentrique dans le bassin circulaire (2), et la tour ronde (3) et le bassin circulaire (2) étant basés sur une plaque de fond (4) commune, et la tour ronde (3) étant hermétiquement cloisonnée par rapport au bassin circulaire (2), **caractérisé en ce que** le côté supérieur du réservoir d'eau est relié à l'extérieur par l'intermédiaire d'une première conduite d'aération (31) menant au côté supérieur de la chambre de commande et de vannes, dans laquelle est intégrée une chambre de mesure et de contrôle (32).

2. Réservoir surélevé selon la revendication 1, **caractérisé en ce que** des filtres sont prévus dans la chambre de mesure et de contrôle (32) pour l'épuration de l'air conduit vers le réservoir d'eau potable au moyen de la première conduite d'aération (31).

3. Réservoir surélevé selon la revendication 1 ou 2, **caractérisé en ce que** des capteurs sont prévus dans la chambre de mesure et de contrôle (32) pour le contrôle de l'air conduit vers le réservoir d'eau potable au moyen de la première conduite d'aération (31).

4. Réservoir surélevé selon l'une des revendications 1 à 3, **caractérisé en ce qu'**une seconde conduite d'aération (41) traversant le réservoir d'eau potable est prévue pour l'aération du sol de la chambre de commande et de vannes.
